(19) Europäisches Patentamt
European Patent Office
Office européen des brevets

(11) **EP 3 578 411 B1**

(12) **EUROPÄISCHE PATENTSCHRIFT**

(45) Veröffentlichungstag und Bekanntmachung des Hinweises auf die Patenterteilung:
**06.07.2022   Patentblatt 2022/27**

(21) Anmeldenummer: **19172777.5**

(22) Anmeldetag: **06.05.2019**

(51) Internationale Patentklassifikation (IPC):
**B60L 53/12** *(2019.01)*      **B60L 53/30** *(2019.01)*
**B60L 53/35** *(2019.01)*      **B60L 53/38** *(2019.01)*
**B60L 53/80** *(2019.01)*      **B60L 53/57** *(2019.01)*

(52) Gemeinsame Patentklassifikation (CPC):
**B60L 53/12; B60L 53/30; B60L 53/32; B60L 53/35;**
**B60L 53/38; B60L 53/57; B60L 53/80;**
B60L 2260/32; Y02T 10/70; Y02T 10/7072;
Y02T 90/12; Y02T 90/14

(54) **MOBILE LADEVORRICHTUNG FÜR EIN ELEKTROFAHRZEUG**

MOBILE CHARGER FOR AN ELECTRIC VEHICLE

DISPOSITIF DE CHARGE MOBILE POUR UN VÉHICULE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.06.2018   DE 102018209106**

(43) Veröffentlichungstag der Anmeldung:
**11.12.2019   Patentblatt 2019/50**

(73) Patentinhaber: **Audi AG**
**85045 Ingolstadt (DE)**

(72) Erfinder: **Ambrosetti, Sebastien**
**85276 Pfaffenhofen a. d. Ilm (DE)**

(56) Entgegenhaltungen:
DE-A1-102016 014 034      DE-A1-102016 221 064
DE-A1-102017 205 233      JP-A- 2009 213 337
US-B1- 9 592 742

**Beschreibung**

Die Erfindung betrifft ein Verfahren zum Laden eines Elektrofahrzeugs während einer Fahrt des Elektrofahrzeugs. Ferner betrifft die Erfindung eine mobile Ladevorrichtung für ein Elektrofahrzeug.

Elektrofahrzeuge, insbesondere Elektroautos, umfassen einen Elektromotor zum Erzeugen eines Vortriebs und eine Batterie, welche eine elektrische Energie speichert und zum Betreiben des Elektromotors bereitstellt. Die in der Batterie gespeicherte elektrische Energie bestimmt eine Reichweite des Elektrofahrzeugs, d. h. begrenzt eine ohne Nachladen der Batterie von dem Elektrofahrzeug maximal zurücklegbare Fahrstrecke. Maximale Reichweiten aktueller Elektrofahrzeuge liegen zumeist bei etwa 500 km.

Das Laden der Batterie kann eine lange Zeit beanspruchen. Ausgehend von einem geringen Ladezustand der Batterie bis zu einer Vollladung können mehrere Stunden Ladezeit erforderlich sein. Zum Laden wird das Elektrofahrzeug an eine stationäre, d. h. ortsfeste Ladestation oder dergleichen angeschlossen und kann während der Ladezeit nicht bewegt werden.

US 9,592,742 B1 offenbart dagegen eine mobile Ladestation, welche sich autonom zu einem parkenden Elektrofahrzeug bewegt, um während des Parkens eine Batterie des Elektrofahrzeugs zu laden.

Erreicht die Batterie während einer Fahrt einen kritischen niedrigen Ladezustand, d. h. geht die in der Batterie gespeicherte elektrische Energie zur Neige, muss die Fahrt zum Laden der Batterie unterbrochen werden, was die Handhabung des Elektrofahrzeugs beeinträchtigt. Um eine Unterbrechung der Fahrt zu vermeiden, muss die Batterie rechtzeitig vor einem Antritt der Fahrt ausreichend geladen werden, wodurch ein spontanes und ununterbrochenes Reisen über eine weite Fahrstrecke praktisch ausgeschlossen ist. Abgesehen davon ist für eine Fahrstrecke, die länger als die Reichweite des Elektrofahrzeugs ist, ein Laden des Elektrofahrzeugs während der Fahrt und folglich eine längere Unterbrechung der Fahrt prinzipiell unvermeidbar. Zudem können Umgebungsfaktoren, wie beispielsweise eine Lufttemperatur, eine Umleitung oder ein hohes Verkehrsaufkommen, die Reichweite des Elektrofahrzeugs unvorhergesehen verringern.

Entsprechend besteht Bedarf, die Handhabbarkeit des Elektrofahrzeugs, insbesondere für weite Fahrstrecken, zu verbessern. Zur Vermeidung von Unterbrechungen einer Fahrt des Elektrofahrzeugs zum Laden der Batterie kommen Lösungen in Betracht, die ein Laden während der Fahrt erlauben, also keine Standzeit des Elektrofahrzeugs an einer Ladestation erfordern.

Die DE 10 2012 214 750 A1 bietet eine solche Lösung an und offenbart ein Verfahren zum Laden eines Elektrofahrzeugs während einer Fahrt des Elektrofahrzeugs. Bei dem Verfahren wird eine elektrische Energie von einer Oberleitung über ein mittels eines Schleifkontakts mit der Oberleitung galvanisch verbundenes Ladefahrzeug zu dem Elektrofahrzeug übertragen. Während der Übertragung der elektrischen Energie ist das Elektrofahrzeug mittels einer Koppeleinrichtung mechanisch und elektrisch mit dem Ladefahrzeug verbunden und fährt in einem vorbestimmten Abstand hinter dem Ladefahrzeug.

Zwar ermöglicht dieses Verfahren ein Laden der Batterie des Elektrofahrzeugs während der Fahrt. Jedoch ist die erforderliche Infrastruktur sehr aufwändig, da entsprechende Oberleitungen über langen Fahrbahnabschnitten vorgesehen sein müssen. Zudem bewegt sich das Elektrofahrzeug während der gesamten Ladedauer notwendig in der Spur und mit der Geschwindigkeit des Ladefahrzeugs, wodurch die Agilität des Elektrofahrzeugs stark eingeschränkt ist und sich eine Dauer der Fahrt infolge des Ladens verlängern kann.

Die DE 10 2015 225 789 A1 offenbart eine weitere mobile Ladevorrichtung. Die mobile Ladevorrichtung umfasst eine Batterie und fährt auf Anforderung aus einer Bereitstellungsanlage selbständig (autonom) zu einer Position eines Elektrofahrzeugs, um eine in der Batterie gespeicherte elektrische Energie mittels einer sowohl mechanischen als auch elektrischen Kopplungsvorrichtung in eine Batterie des Elektrofahrzeugs zu übertragen. Das Übertragen der elektrischen Energie kann auch während einer Fahrt des Elektrofahrzeugs erfolgen.

Diese Lösung basiert demnach darauf, dass die mobile Ladevorrichtung eine umfassende Selbstfahrfunktion aufweist. Sie kommt ohne eine aufwändige Infrastruktur, wie ein Oberleitungssystem, aus und kann auch in Gebieten ohne Ladestation oder bei einem entfernt von einer Ladestation liegengebliebenen Elektrofahrzeug ein Laden der Batterie des Elektrofahrzeugs gewährleisten.

Jedoch erfordert sie eine mobile Ladevorrichtung, die sich selbständig in einem Straßenverkehr bewegt. Eine solche mobile Ladevorrichtung besitzt eine hohe Komplexität und erhöht sowohl eine Dichte eines Straßenverkehrs, d. h. ein Verkehrsaufkommen, als auch eine Unfallgefahr für jeden Teilnehmer an dem Straßenverkehr. Als nachteilig kann zudem die mechanische Kopplung zwischen der vorausfahrenden mobilen Ladevorrichtung und dem dieser folgenden Elektrofahrzeug angesehen werden.

Ein weiteres Verfahren zum Laden einer Fahrzeugbatterie eines Elektrofahrzeugs während der Fahrt des Elektrofahrzeugs wird in der DE 10 2016 014 034 A1 beschrieben. Bei dem Verfahren fährt das Elektrofahrzeug hinter einer mobilen Ladestation mit derselben Geschwindigkeit wie die mobile Ladestation. Währenddessen wird eine elektrische Energie von der mobilen Ladestation über eine magnetische Induktionsstrecke in die Batterie des Elektrofahrzeugs übertragen, wobei die magnetische Induktionsstrecke von einer an einer Hinterseite der mobilen Ladestation angeordneten Induktionsplatte und einer an einer Vorderseite des Elektrofahrzeugs angeordneten Induktionsplatte gebildet ist. Aus JP 2009 213337 A1 ist dagegen bekannt, eine Batterie eines Elektrofahrzeugs mittels einer unter dem Elektrofahrzeug fahrenden mobilen Ladestation zu laden.

Demnach ist eine mechanische Kopplung zwischen der mobilen Ladestation und dem Elektrofahrzeug nicht vorgesehen. Allerdings muss das Elektrofahrzeug auch bei dieser Lösung mit derselben Geschwindigkeit wie die mobile Ladestation und in einem vorbestimmten Abstand hinter der mobilen Ladestation fahren, um während der Ladezeit ein Funktionieren der magnetischen Induktionsstrecke sicherzustellen.

Eine elektrische Energie kann aber auch unmittelbar zwischen zwei fahrenden Fahrzeugen induktiv übertragen werden. Ein solches Ladeverfahren ist in DE 10 2016 221 064 A1 beschrieben.

Der Erfindung liegt daher die Aufgabe zugrunde, ein Verfahren anzugeben, welches die beschriebenen Nachteile vermeidet und die Verwendbarkeit mobiler Ladevorrichtungen weiter verbessert. Darüber hinaus ist es Aufgabe der Erfindung und eine mobile Ladevorrichtung zum Durchführen des Verfahrens zu schaffen.

Die Erfindung ist in dem beigefügten Hauptanspruch angegeben. Die abhängigen Ansprüche geben weiter entwickelte Ausführungsformen der Erfindung an.

Ein Gegenstand der Erfindung ist ein Verfahren nach Anspruch 1 zum Laden eines Elektrofahrzeugs während einer Fahrt des Elektrofahrzeugs.

Erfindungsgemäß umfasst das Verfahren die folgenden Schritte:

- Bereitstellen einer mobilen Ladevorrichtung;
- Anordnen der mobilen Ladevorrichtung unter einem fahrenden Elektrofahrzeug;
- Befestigen der mobilen Ladevorrichtung an einer Unterseite des Elektrofahrzeugs;
- Übertragen einer elektrischen Energie von der mobilen Ladevorrichtung in das Elektrofahrzeug;
- Lösen der mobilen Ladevorrichtung von der Unterseite des Elektrofahrzeugs;
- Erneutes Bereitstellen der mobilen Ladevorrichtung.

Die mobile Ladevorrichtung kann beispielsweise an einem Fahrbahnabschnitt einer Autobahn bereitgestellt werden. Zum Übertragen der elektrischen Energie wird die mobile Ladevorrichtung nach einer Anforderung von einem Fahrer des zu ladenden Elektrofahrzeugs an einer Unterseite des Elektrofahrzeugs angeordnet und dort relativ zu dem Elektrofahrzeug festgelegt. Das Anordnen und Befestigen der mobilen Ladevorrichtung unter dem Elektrofahrzeug kann während der Fahrt des Elektrofahrzeugs oder während eines kurzen Halts des Elektrofahrzeugs erfolgen.

In einer Ausführungsform wird die mobile Ladevorrichtung mit einer geladenen Batterie bereitgestellt. Die geladene Batterie speichert elektrische Energie, welche dem Elektrofahrzeug von der mobilen Ladevorrichtung während der Fahrt des Elektrofahrzeugs verfügbar gemacht werden kann.

In einer bevorzugten Ausführungsform wird die elektrische Energie aus der Batterie der mobilen Ladevorrichtung über eine magnetische Induktionsstrecke in die Batterie des Elektrofahrzeugs übertragen. Die magnetische Induktionsstrecke ermöglicht ein berührungsloses Übertragen elektrischer Energie, d. h. während der Übertragung besteht keine galvanische Verbindung zwischen der Ladevorrichtung und dem Elektrofahrzeug. Entsprechend können Kontaktprobleme, wie beispielsweise eine Korrosion von Kontaktflächen, vermieden werden.

Alternativ oder zusätzlich kann die Batterie der mobilen Ladevorrichtung in das Elektrofahrzeug eingesetzt werden, insbesondere im Austausch mit einer entladenen Batterie des Elektrofahrzeugs. Auf diese Weise wird die elektrische Energie rein mechanisch übertragen, wodurch zum Übertragen deutlich weniger Zeit benötigt wird als über eine magnetische Induktionsstrecke. Allerdings muss sichergestellt sein, dass das Elektrofahrzeug bei einem Austausch der Batterie zu keinem Zeitpunkt von der elektrischen Energie abgeschnitten ist. Dies kann beispielsweise mit einer modular ausgebildeten Batterie ermöglicht werden, welche eine Mehrzahl parallel geschalteter Batteriemodule umfasst. Bei einer modularen Batterie kann ein Batteriemodul ausgetauscht werden, während die übrigen Batteriemodule das Elektrofahrzeug weiterhin mit elektrischer Energie versorgen.

Erfindungsgemäß wird ferner die elektrische Energie aus einer Batterie eines weiteren Elektrofahrzeugs mittels einer an dem weiteren Elektrofahrzeug befestigten weiteren mobilen Ladevorrichtung über mindestens eine weitere magnetische Induktionsstrecke übertragen. Anders gesagt findet bei dieser Variante ein Übertragen von elektrischer Energie zwischen zwei Elektrofahrzeugen statt, welche jeweils mit einer mobilen Ladevorrichtung induktiv gekoppelt sind. Zusätzlich sind die beiden Ladevorrichtungen elektrisch und/oder magnetisch miteinander gekoppelt. Auf diese Weise kann ein Übertragen von elektrischer Energie aus der Batterie des weiteren Elektrofahrzeugs über mindestens zwei magnetische Induktionsstrecken in die Batterie des Elektrofahrzeugs erfolgen. Wenn die beiden mobilen Ladevorrichtungen jeweils eine Batterie umfassen, kann alternativ oder zusätzlich elektrische Energie zwischen den beiden Batterien der mobilen Ladevorrichtungen übertragen werden.

Weiterhin erfindungsgemäß bilden das Elektrofahrzeug und das weitere Elektrofahrzeug einen Fahrkonvoi und fahren während des Übertragens der elektrischen Energie in einem vorbestimmten Abstand derart hintereinander, dass eine magnetische Induktionsstrecke zwischen den beiden mobilen Ladevorrichtungen gebildet ist. Die beiden beteiligten Elektrofahrzeuge stellen mittels spezieller Fahrassistenzsysteme einen Abstand zueinander derart ein, dass zwischen den beiden mobilen Ladevorrichtungen eine dritte magnetische Induktionsstrecke gebildet wird.

Dabei kann der Fahrkonvoi von den beiden Elektrofahrzeugen und mindestens einem mit einer mobilen Ladevorrichtung versehenen dritten Fahrzeug gebildet werden. Der Fahrkonvoi wird also von mehr als zwei Elektrofahrzeugen gebildet. Insbesondere können auch verbrennungsmotorisch angetriebene Fahrzeuge bei entsprechender Treibstofferparnis an einem solchen Fahrkonvoi teilnehmen, ohne selbst eine elektrische Energie zu übertragen oder übertragen zu erhalten. In diesem Fall dient die an einem verbrennungsmotorisch angetriebenen Fahrzeug befestigte mobile Ladevorrichtung lediglich einer Energieübertragung zu und/oder von einer weiteren mobilen Ladevorrichtung, welche an einem in dem Fahrkonvoi vorausfahrenden Fahrzeug oder an einem in dem Fahrkonvoi hinterherfahrenden Fahrzeug befestigt ist. Entsprechend braucht die an einem verbrennungsmotorisch angetriebenen Fahrzeug befestigte mobile Ladevorrichtung vor einem Einsatz nicht geladen zu werden.

In bevorzugten Ausführungsformen wird zum Befestigen die mobile Ladevorrichtung insbesondere elektromagnetisch an das Elektrofahrzeug gekoppelt und insbesondere in dem gekoppelten Zustand an der Unterseite des Elektrofahrzeugs verriegelt, insbesondere elektromechanisch. Durch die elektromagnetische Kopplung wird die relative Anordnung der mobilen Ladevorrichtung und des Elektrofahrzeugs derart fixiert, dass sich die mobile Ladevorrichtung ohne Verwendung eines eigenen Antriebs synchron mit dem Elektrofahrzeug bewegt. Zudem kann die mobile Ladevorrichtung infolge der elektromagnetischen Kopplung angehoben und von einer Fahrbahn getrennt werden, wodurch die mobile Ladevorrichtung während der Übertragung von elektrischer Energie keinen eigenen Antrieb benötigt und zudem die Reibungsverluste der aus dem Elektrofahrzeug und der mobilen Ladevorrichtung gebildeten Anordnung verringert sind. Weiterhin lässt sich elektrische Energie für die elektromagnetische Kopplung einsparen, wenn die mobile Ladevorrichtung im gekoppelten Zustand mittels elektromechanisch betätigter Aktuatoren unter dem Elektrofahrzeug verriegelt wird.

In vorteilhaften Ausführungsformen wird die mobile Ladevorrichtung in einer Bereitstellungsanlage bereitgestellt und/oder zum Anordnen beschleunigt und/oder aus der Bereitstellungsanlage unter das Elektrofahrzeug verfahren, insbesondere auf einer geraden Trajektorie, und/oder zum erneuten Bereitstellen in eine Bereitstellungsanlage verfahren. Bereitstellungsanlagen können beispielsweise an geraden Fahrbahnabschnitten von Autobahnen, insbesondere an Autobahnauffahrten und Autobahnabfahrten, vorgesehen sein. Das Beschleunigen oder Bremsen der mobilen Ladevorrichtung kann sowohl mittels eines eigenen elektrischen Antriebs als auch durch externe Beschleunigungsmittel oder Bremsmittel, wie beispielsweise ein Katapult oder eine Reibungsstrecke, erfolgen. Wenn die mobile Ladevorrichtung auf einer definierten geraden Trajektorie unter das Elektrofahrzeug verfahren wird, ist eine Lenkfähigkeit der mobilen Ladevorrichtung nicht erforderlich, was mit einem einfachen Aufbau der mobilen Ladevorrichtung einhergeht.

Gegenstand der Erfindung ist auch eine mobile Ladevorrichtung nach Anspruch 11 zum Laden eines Elektrofahrzeugs während einer Fahrt des Elektrofahrzeugs in einem erfindungsgemäßen Verfahren. Die mobile Ladevorrichtung ermöglicht es, die Batterie des Elektrofahrzeugs zu laden, ohne die Fahrt des Elektrofahrzeugs zum Halten an einer Ladestation zu unterbrechen. Dies geht mit einer entsprechenden Verkürzung der Fahrtzeit und einem verbesserten Komfort einher.

Die erfindungsgemäße Ladevorrichtung umfasst ein Gestell, eine an dem Gestell ausgebildete Aufnahme für eine Batterie, eine Mehrzahl von an dem Gestell drehbar gelagerten angetriebenen Rollen drei an dem Gestell angeordnete Induktionsspulen, mindestens einen Sensor zum Erfassen einer Position relativ zu dem Elektrofahrzeug, insbesondere ein Kommunikationsmodul zum Errichten einer Datenverbindung mit dem Elektrofahrzeug, eine mit dem Gestell verbundene insbesondere elektromagnetische Koppelvorrichtung und insbesondere eine an dem Gestell vorgesehene insbesondere elektromechanische Verriegelungsvorrichtung. Ferner kann die mobile Ladevorrichtung einen Austauschmechanismus mit mindestens einem kompakten Elektrozylinder umfassen, der ausgebildet ist, einen automatischen Austausch der Fahrzeugbatterie durchzuführen.

Die Aufnahme kann auch zum Aufnehmen mehrerer Batteriemodule einer Batterie ausgebildet sein. Die Rollen können auch als Räder ausgebildet sein und/oder mit einem elektrischen Radnabenmotor versehen sein. Zum Betreiben der elektrischen Radnabenmotoren kann eine separate Batterie des Gestells vorgesehen sein. Erfindungsgemäß sind weiterhin zwei der drei Induktionsspulen an einer Vorderseite und an einer Hinterseite des Gestells angeordnet, um mit einem vorausfahrenden oder einem nachfolgenden Gestell eine magnetische Induktionsstrecke bilden zu können. Die dritte Induktionsspule kann in einem mittleren Abschnitt des Gestells zwischen der Vorderseite und der Hinterseite derart angeordnet sein, dass eine Position der dritten Induktionsspule zu einer Position einer Induktionsspule des Elektrofahrzeugs korrespondiert, wenn die mobile Ladevorrichtung unter dem Elektrofahrzeug fixiert ist. Der mindestens eine Sensor kann beispielsweise als ein induktiver Sensor vorgesehen, das Kommunikationsmodul für eine Funkverbindung (Car2X, BT-Beacon) ausgebildet sein. Die elektromagnetische Koppeleinrichtung kann ausgebildet sein, die mobile Ladevorrichtung anzuheben, von der Fahrbahn zu trennen und mit einer Bodenfläche des Elektrofahrzeugs in Anlage zu bringen. Die Verriegelungsvorrichtung kann elektromechanische Aktuatoren umfassen, welche Verriegelungsmittel oder Verrastungsmittel zum Festlegen der mobilen Ladevorrichtung an der Unterseite des Elektrofahrzeugs betätigen.

Eine ausschließlich für verbrennungsmotorisch angetriebene Fahrzeuge verwendete mobile Ladevorrichtung kann gegenüber einer auch für Elektrofahrzeuge geeigneten mobilen Ladevorrichtung einen vereinfachten Aufbau aufweisen. Beispielsweise muss sie weder eine Aufnahme für eine Batterie aufzuweisen noch benötigt sie eine dritte Induktionsspule in einem mittleren Abschnitt des Gestells.

Die Erfindung kann mit Elektrofahrzeugen ausgeführt werden, welche ausgebildet sind, von einer mobilen Ladevorrichtung, insbesondere einer erfindungsgemäßen mobilen Ladevorrichtung, während einer Fahrt geladen zu werden, insbesondere in einem erfindungsgemäßen Verfahren. Das Elektrofahrzeug ist zum Laden seiner Batterie demnach nicht auf eine stationäre Ladestation angewiesen und folglich hinsichtlich seines Energiemanagements einfach handhabbar.

Jedes Elektrofahrzeug umfasst eine zu einer Induktionsspule der mobilen Ladevorrichtung korrespondierende Induktionsspule, ist dessen Unterseite zum Koppeln der mobilen Ladevorrichtung und insbesondere zum Verriegeln der gekoppelten mobilen Ladevorrichtung ausgebildet, und insbesondere ein Fahrassistenzsystem, welches konfiguriert ist, mit einem weiteren Elektrofahrzeug einen Fahrkonvoi derart zu bilden, dass die beiden Elektrofahrzeuge in einem vorbestimmten Abstand hintereinander fahren. Die Induktionsspule ist in dem Elektrofahrzeug derart angeordnet, dass sie mit der Induktionsspule der mobilen Ladevorrichtung eine magnetische Induktionsstrecke bildet, wenn die mobile Ladevorrichtung an die Unterseite des Elektrofahrzeugs gekoppelt bzw. an dieser verriegelt oder verrastet ist. Das Fahrassistenzsystem ist konfiguriert, die an das Elektrofahrzeug gekoppelte mobile Ladevorrichtung relativ zu einer an ein weiteres Elektrofahrzeug gekoppelten mobilen Ladevorrichtung derart anzuordnen, dass zwischen den mobilen Ladevorrichtungen eine weitere magnetische Induktionsstrecke gebildet ist. Bei einem aktivierten Fahrassistenzsystem (pilotierte Kolonnenfahrt) kann ein Fahrer des Elektrofahrzeugs von einem Steuern des Fahrzeugs entlastet sein. Innerhalb eines von mehreren Elektrofahrzeugen gebildeten Fahrkonvois ist ein Übertragen von elektrischer Energie zwischen den Elektrofahrzeugen möglich.

Die Erfindung ist anhand von Ausführungsformen in den Zeichnungen schematisch dargestellt und wird unter Bezugnahme auf die Zeichnungen weiter beschrieben. Es zeigt:

Figur 1     in einer schematischen Darstellung eine Hinteransicht, eine Seitenansicht, eine Vorderansicht und eine Draufsicht einer Anordnung mit einer mobilen Ladevorrichtung und einem Elektrofahrzeug;

Figur 2     in einer schematischen Darstellung eine Draufsicht der in Figur 1 gezeigten mobilen Ladevorrichtung;

Figur 3     in einer perspektivischen Darstellung eine Teilansicht des in Figur 1 gezeigten Elektrofahrzeugs;

Figur 4     in einer schematischen Darstellung eine Seitenansicht von drei in Figur 1 gezeigten gemäß einer Ausführungsform der Erfindung einen Fahrkonvoi bildenden Anordnungen;

Figur 5     in einer schematischen Darstellung eine Hinteransicht, eine Seitenansicht und eine Vorderansicht einer weiteren Anordnung mit einer mobilen Ladevorrichtung und einemElektrofahrzeug in zwei Phasen einesLadeverfahrens.

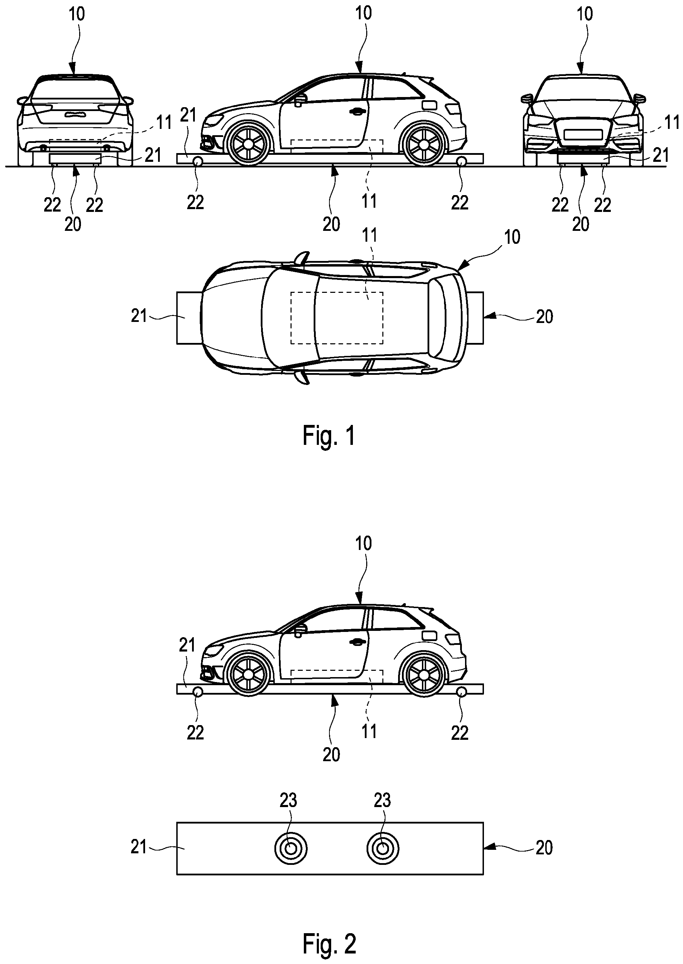

Die Figuren 1, 2, 3 und 5 zeigen keine erfindungsgemäße Ausführungsform und dienen lediglich der Veranschaulichung.

Die Figuren 1 und 2 zeigen in einer schematischen Darstellung eine Hinteransicht, eine Seitenansicht, eine Vorderansicht und eine Draufsicht einer Anordnung mit einer mobilen Ladevorrichtung 20 und einem Elektrofahrzeug 10.

Die mobile Ladevorrichtung 20 dient zum Laden des Elektrofahrzeugs 10 während einer Fahrt des Elektrofahrzeugs 10 und umfasst ein Gestell 21, eine nicht sichtbare in das Gestell 21 integrierte Batterie und vier an dem Gestell 21 drehbar gelagerte Rollen 22. Ferner umfasst die mobile Ladevorrichtung 20 je Rolle 22 einen nicht sichtbaren Radnabenmotor zum automatischen Antreiben der jeweils zugeordneten Rolle 22.

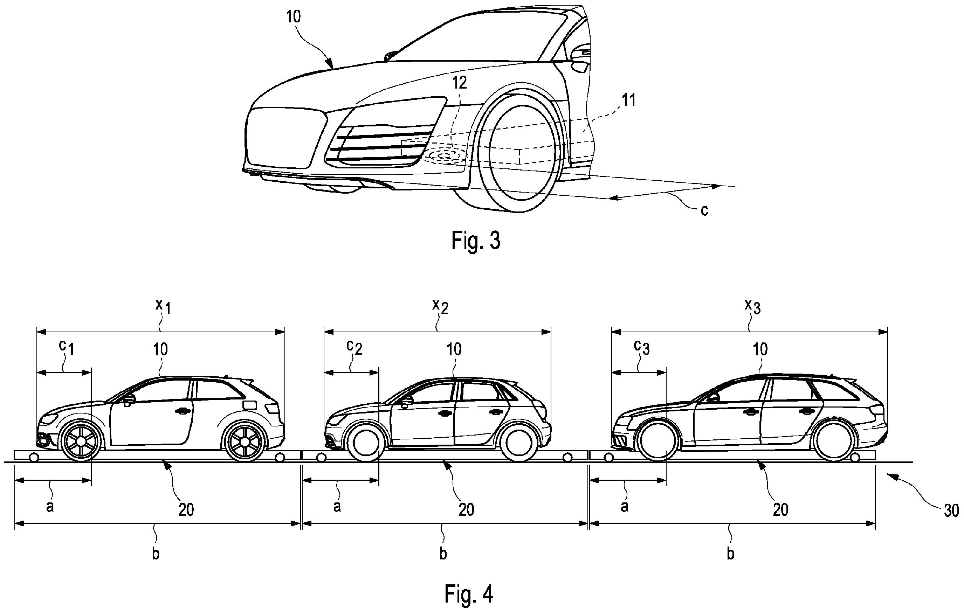

Die Ladevorrichtung 20 umfasst weiterhin zwei in einem mittleren Abschnitt des Gestells 21 zwischen einer Vorderseite des Gestells 21 und einer Hinterseite des Gestells 21 angeordnete Induktionsspulen 23 und zwei weitere nicht sichtbare an der Vorderseite des Gestells 21 und an der Hinterseite des Gestells 21 angeordnete Induktionsspulen zum Bilden jeweils einer induktiven Übertragungsstrecke zu einem Elektrofahrzeug 10 oder einem Gestell 21 einer weiteren mobilen Ladevorrichtung 20 innerhalb eines Fahrkonvois 30 (s. Figur 4).

Weitere Komponenten der Ladevorrichtung 20 sind ein oder mehrere induktive Sensoren zum Erfassen einer Position relativ zu dem Elektrofahrzeug 10, ein Kommunikationsmodul zum Errichten einer Datenverbindung mit dem Elektrofahrzeug 10, eine mit dem Gestell 21 verbundene elektromagnetische Koppelvorrichtung und eine an dem Gestell 21 vorgesehene Verriegelungsvorrichtung mit Verriegelungsmitteln oder Verrastungsmitteln und diesen zugeordneten elektromechanisch betätigbaren Aktuatoren. Diese Komponenten sind in den Figuren nicht abgebildet und können von dem Fachmann zweckdienlich ausgebildet und an dem Gestell 21 angeordnet werden.

Das Elektrofahrzeug 10 ist ausgebildet, von der mobilen Ladevorrichtung 20 während einer Fahrt geladen zu werden und umfasst eine Batterie 11. Eine Unterseite des Elektrofahrzeugs 10 ist zum Koppeln der mobilen Ladevorrichtung 20 und insbesondere zum Verriegeln oder Verrasten der gekoppelten mobilen Ladevorrichtung 20 ausgebildet, weist also korrespondierende Verriegelungsmittel oder Verrastungsmittel auf.

Ferner umfasst das Elektrofahrzeug 10 ein nicht sichtbares Fahrassistenzsystem, welches konfiguriert ist, mit einem weiteren Elektrofahrzeug 10 einen Fahrkonvoi 30 (s. Figur 4) derart zu bilden, dass die beiden Elektrofahrzeuge 10 in einem vorbestimmten Abstand hintereinander fahren.

Figur 3 zeigt in einer perspektivischen Darstellung eine Teilansicht des in den Figuren 1 und 2 gezeigten Elektrofahrzeugs 10. Das Elektrofahrzeug 10 umfasst zum Bilden einer magnetischen Induktionsstrecke eine Induktionsspule 12, die in einem von einem vorderen Ende des Elektrofahrzeugs 10 aus gemessenen Abstand c bodennah vorgesehen ist.

Zum Laden des Elektrofahrzeugs 10 während einer Fahrt des Elektrofahrzeugs 10 wird zunächst die mobile Ladevorrichtung 20 in einer Bereitstellungsanlage mit einer geladenen Batterie bereitgestellt. Nach einer Anforderung eines Fahrers des Elektrofahrzeugs 10 wird die Ladevorrichtung 20 automatisch mittels der Radnabenmotoren beschleunigt, aus der Bereitstellungsanlage auf einer geraden Trajektorie zu dem fahrenden Elektrofahrzeug 10 verfahren und unter dem fahrenden Elektrofahrzeug 10 angeordnet, wobei die induktiven Sensoren und das Kommunikationsmodul zum relativen Ausrichten der mobilen Ladevorrichtung 20 und des Elektrofahrzeugs 10 verwendet werden.

In einem weiteren Schritt wird die mobile Ladevorrichtung 20 an der Unterseite des Elektrofahrzeugs 10 befestigt, indem die mobile Ladevorrichtung 20 mittels der elektromagnetischen Kopplungsvorrichtung an das Elektrofahrzeug 10 gekoppelt und in dem gekoppelten Zustand durch Betätigen der Verriegelungsmittel mittels der elektromechanischen Aktuatoren an der Unterseite des Elektrofahrzeugs 10 festgelegt, d. h. arretiert, wird. In dem verriegelten Zustand der Ladevorrichtung 20 bilden eine Induktionsspule 23 der mobilen Ladevorrichtung 20 und die Induktionsspule 12 des Elektrofahrzeugs 10 eine magnetische Induktionsstrecke.

Dann wird die in der geladenen Batterie der mobilen Ladevorrichtung 20 gespeicherte elektrische Energie während der Fahrt des Elektrofahrzeugs 10 über die gebildete Induktionsstrecke in das Elektrofahrzeug 10 übertragen. Nach der erfolgten Übertragung der elektrischen Energie wird die mobile Ladevorrichtung 20 von der Unterseite des Elektrofahrzeugs 10 mittels eines Entriegelns und Entkoppelns gelöst, auf einer geraden Trajektorie in eine weitere Bereitstellungsanlage verfahren und dort für eine Durchführung des vorstehend beschriebenen Verfahrens erneut bereitgestellt. Der Fachmann versteht, dass die Bereitstellungsanlagen ein Lagerverwaltungssystem aufweisen und mobile Ladevorrichtungen 20 regelmäßig zwischen Bereitstellungsanlagen transportiert werden müssen, um in jeder Bereitstellungsanlage jederzeit eine ausreichende Anzahl mobiler Ladevorrichtungen 20 bereitzustellen.

Figur 4 zeigt in einer schematischen Darstellung eine Seitenansicht eines von drei in Figur 1 gezeigten Anordnungen gemäß einer Ausführungsform der Erfindung gebildeten Fahrkonvois 30. Der Fahrkonvoi 30 umfasst drei Elektrofahrzeuge 10, an deren Unterseiten jeweils eine mobile Ladevorrichtung 20 festgelegt ist.

Die Elektrofahrzeuge 10 weisen jeweils unterschiedliche Längen $x_1$, $x_2$, $x_3$ auf, und die nicht sichtbaren Induktionsspulen 12 sind in einem von dem vorderen Ende des jeweiligen Elektrofahrzeugs 10 aus gemessenen Abstand $c_1$, $c_2$, $c_3$ bodennah vorgesehen.

Die Ladevorrichtungen 20 weisen dagegen identische Längen b auf, und die nicht sichtbaren Induktionsspulen 23 sind in einem von dem vorderen Ende des Gestells 21 der jeweiligen mobilen Ladevorrichtung 20 aus gemessenen Abstand a vorgesehen.

Dabei gelten für die Abstände und Längen der Elektrofahrzeuge 10 bzw. der Gestelle 21 die folgenden Beziehungen:

$$c_{1,2,3} < a$$

und

$$x_{1,2,3} < b,$$

d. h. die Gestelle 21 sind länger als die Elektrofahrzeuge 10, stehen also von den Elektrofahrzeugen 10 jeweils nach vorn und hinten vor, und die Induktionsspulen 23 der mobilen Ladevorrichtungen 20 sind von den vorderen Enden der Gestelle 21 weiter beabstandet als die Induktionsspulen 12 von den vorderen Enden der Elektrofahrzeuge 10.

Jede Ladevorrichtung 20 ist an einem Elektrofahrzeug 10 derart festgelegt, dass die Induktionsspule 23 der mobilen Ladevorrichtung 20 und die Induktionsspule 12 des Elektrofahrzeugs 10 gegenüberliegend angeordnet sind und eine magnetische Induktionsstrecke bilden.

Die Elektrofahrzeuge 10 sind in vorbestimmten Abständen derart hintereinander angeordnet, dass zwischen den an ihnen jeweils festgelegten mobilen Ladevorrichtungen 20 jeweils möglichst kleine Zwischenräume gebildet sind, so dass je eine an einer Hinterseite eines Gestells 21 angeordnete Induktionsspule und eine an einer Vorderseite eines vorderen Gestells 21 angeordnete Induktionsspule eine magnetische Induktionsstrecke bilden.

Innerhalb des Fahrkonvois 30 wird die elektrische Energie aus einer Batterie 11 eines zweiten Elektrofahrzeugs 10 mittels einer an dem zweiten Elektrofahrzeug 10 befestigten weiteren mobilen Ladevorrichtung 20 über mindestens eine weitere magnetische Induktionsstrecke in ein erstes Elektrofahrzeug 10 übertragen. Dazu fahren das zweite Elektrofahrzeug 10 und das erste Elektrofahrzeug 10 in einem vorbestimmten Abstand derart hintereinander, dass eine weitere magnetische Induktionsstrecke zwischen den beiden zugeordneten mobilen Ladevorrichtungen 20 gebildet ist.

Das dritte Fahrzeug 10 des Fahrkonvois 30 braucht kein Elektrofahrzeug zu sein, sondern kann ein verbrennungsmotorisch angetriebenes Fahrzeug sein. In letzterem Fall findet zwar keine Übertragung einer elektrischen Energie zu oder von dem dritten Fahrzeug 10 statt. Jedoch kann das dritte Fahrzeug 10 von einer Beteiligung an dem Fahrkonvoi 30 dank einer eigenen Treibstoffersparnis profitieren.

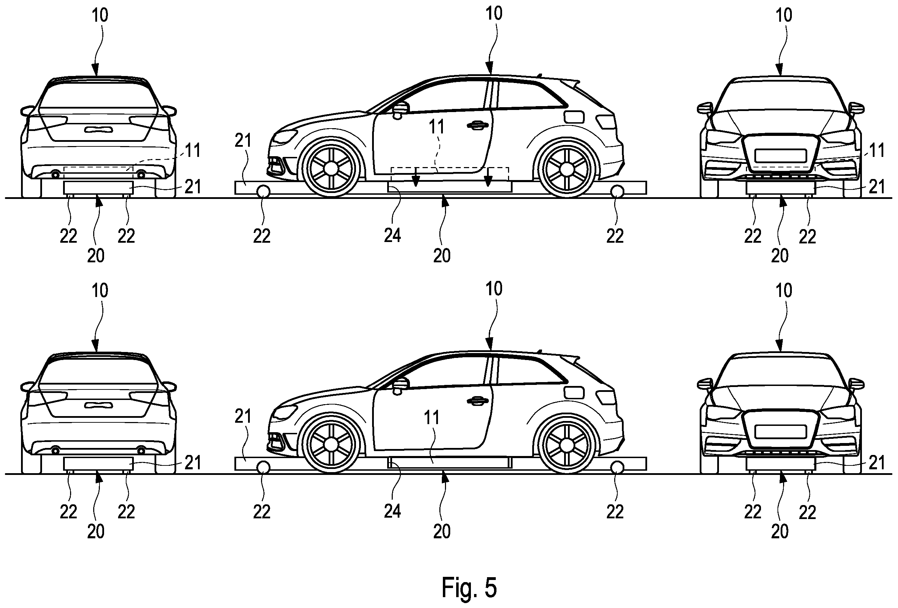

Figur 5 zeigt in einer schematischen Darstellung eine Hinteransicht, eine Seitenansicht und eine Vorderansicht einer Anordnung mit einer mobilen Ladevorrichtung 20 und einem Elektrofahrzeug 10 in zwei Phasen eines Ladeverfahrens. Das Elektrofahrzeug 10 und die mobile Ladevorrichtung 20 haben denselben Grundaufbau wie in der in den Figuren 1 bis 4 gezeigten Anordnung. Abweichend von dieser ist an dem Gestell 21 ein nicht dargestellter Austauschmechanismus mit einem kompakten Elektrozylinder vorgesehen und eine Aufnahme 24 zum Aufnehmen der Batterie 11 des Elektrofahrzeugs 10 ausgebildet. Entsprechend ist das Elektrofahrzeug 10 ausgebildet, die Batterie 11 während einer Fahrt zu lösen und in die Aufnahme 24 des gekoppelten Gestells 21 zu geben.

Bei dem Verfahren wird eine von der mobilen Ladevorrichtung 20 bereitgestellte geladene Batterie in das Elektrofahrzeug 10 eingesetzt, während im Austausch eine entladene Batterie 11 des Elektrofahrzeugs 10 in die Aufnahme 24 der mobilen Ladevorrichtung 20 gegeben wird. Um das Elektrofahrzeug 10 während des Austauschens nicht von der elektrischen Energie abzuschneiden, kann die Batterie 11 modular ausgebildet sein und eine Mehrzahl parallel geschalteter Batteriemodule umfassen. Das Übertragen elektrischer Energie von der mobilen Ladevorrichtung 20 in das Elektrofahrzeug 10 erfolgt in diesem Fall durch sukzessives Austauschen einzelner Batteriemodule.

Ein wesentlicher Vorteil des erfindungsgemäßen Verfahrens besteht darin, dass auch bei weiten Fahrstrecken oder bei einer unvorhersehbaren Verkürzung der Reichweite des Elektrofahrzeugs 10 eine Fahrt nicht unterbrochen werden muss, um die Batterie 11 des Elektrofahrzeugs 10 zu laden. Dadurch ist die Handhabbarkeit des Elektrofahrzeugs 10 deutlich verbessert, was mit einer höheren Akzeptanz des Elektrofahrzeugs 10 einhergeht. Ein weiterer Vorteil ist darin zu sehen, dass die Agilität des Elektrofahrzeugs 10 durch die angekoppelte mobile Ladevorrichtung 20 nicht wesentlich eingeschränkt ist. Ferner bietet das vorgeschlagene Verfahren eine hohe Flexibilität betreffend die Art und Weise, wie die elektrische Energie in das Elektrofahrzeug 10 und woher elektrische Energie in das Elektrofahrzeug 10 übertragen wird.

BEZUGSZEICHENLISTE:

| 10 | Elektrofahrzeug |
|---|---|
| 11 | Batterie |
| 12 | Induktionsspule |
| 20 | mobile Ladevorrichtung |
| 21 | Gestell |
| 22 | Rolle |
| 23 | Induktionsspule |
| 24 | Aufnahme |
| $c, c_1, c_2, c_3$ | Abstand |
| $x_1, x_2, x_3$ | Länge |
| $a$ | Abstand |
| $b$ | Länge |

**Patentansprüche**

1.   Verfahren zum Laden eines Elektrofahrzeugs (10) während einer Fahrt des Elektrofahrzeugs (10), mit den folgenden Schritten:

- Bereitstellen einer mobilen Ladevorrichtung (20);
- Anordnen der mobilen Ladevorrichtung (20) unter einem fahrenden Elektrofahrzeug (10);
- Befestigen der mobilen Ladevorrichtung (20) an einer Unterseite des Elektrofahrzeugs (10);
- Übertragen einer elektrischen Energie von der mobilen Ladevorrichtung (20) in das Elektrofahrzeug (10);
- Lösen der mobilen Ladevorrichtung (20) von der Unterseite des Elektrofahrzeugs (10);
- Erneutes Bereitstellen der mobilen Ladevorrichtung (20),

**dadurch gekennzeichnet, dass**
die elektrische Energie aus einer Batterie (11) eines weiteren Elektrofahrzeugs (10) mittels einer an dem weiteren Elektrofahrzeug (10) befestigten weiteren mobilen Ladevorrichtung (20) über mindestens eine weitere magnetische Induktionsstrecke übertragen wird, wobei das Elektrofahrzeug (10) und das weitere Elektrofahrzeug (10) einen Fahrkonvoi (30) bilden und während des Übertragens der elektrischen Energie in einem vorbestimmten Abstand derart hintereinander fahren, dass die weitere magnetische Induktionsstrecke zwischen den beiden mobilen Ladevorrichtungen (20) gebildet ist.

2.   Verfahren nach Anspruch 1, bei dem die mobile Ladevorrichtung (20) mit einer geladenen Batterie bereitgestellt wird.

3.   Verfahren nach Anspruch 2, bei dem die elektrische Energie aus der Batterie der mobilen Ladevorrichtung (20) über eine magnetische Induktionsstrecke in die Batterie (11) des Elektrofahrzeugs (10) übertragen wird.

4. Verfahren nach Anspruch 2, bei dem die Batterie der mobilen Ladevorrichtung (20) in das Elektrofahrzeug (10) eingesetzt wird.

5. Verfahren nach Anspruch 4, bei dem die Batterie der mobilen Ladevorrichtung (20) im Austausch mit einer entladenen Batterie (11) des Elektrofahrzeugs (10) eingesetzt wird.

6. Verfahren nach einem der Ansprüche 1 bis 5, bei dem der Fahrkonvoi (30) von den beiden Elektrofahrzeugen (10) und mindestens einem mit einer mobilen Ladevorrichtung (20) versehenen dritten Fahrzeug (10) gebildet wird.

7. Verfahren nach einem der Ansprüche 1 bis 6, bei dem zum Befestigen die mobile Ladevorrichtung (20) an das Elektrofahrzeug (10) gekoppelt wird.

8. Verfahren nach Anspruch 7, bei dem die mobile Ladevorrichtung (20) in dem gekoppelten Zustand an der Unterseite des Elektrofahrzeugs (10) verriegelt wird.

9. Verfahren nach einem der Ansprüche 1 bis 8, bei dem die mobile Ladevorrichtung (20) in einer Bereitstellungsanlage bereitgestellt, zum Anordnen beschleunigt, aus der Bereitstellungsanlage unter das Elektrofahrzeug (10) verfahren und zum erneuten Bereitstellen in eine Bereitstellungsanlage verfahren wird.

10. Verfahren nach Anspruch 9, bei dem die mobile Ladevorrichtung (20) auf einer geraden Trajektorie unter das Elektrofahrzeug (10) verfahren wird.

11. Mobile Ladevorrichtung (20) zum Laden eines Elektrofahrzeugs (10) während einer Fahrt des Elektrofahrzeugs (10) in einem Verfahren nach einem der Ansprüche 1 bis 10, welche ein Gestell (21), eine an dem Gestell (21) ausgebildete Aufnahme (24) für eine Batterie (11), eine Mehrzahl von an dem Gestell (21) drehbar gelagerten und angetriebenen Rollen (22), drei an dem Gestell angeordnete Induktionsspulen (23), und mindestens einen Sensor zum Erfassen einer Position relativ zu dem Elektrofahrzeug (10) umfasst, wobei zwei der drei Induktionsspulen an einer Vorderseite des Gestells und an einer Rückseite des Gestells angeordnet sind, um mit einem vorausfahrenden oder einem nachfolgenden Gestell eine magnetische Induktionsstrecke bilden zu können, und die dritte Induktionspulle in einem mittleren Abschnitt des Gestells derart angeordnet ist, dass eine Position der dritten Induktionsspule zu einer Position einer Induktionsspule des Elektrofahrzeugs korrespondiert, wenn die mobile Ladevorrichtung unter dem Elektrofahrzeug fixiert ist.

12. Mobile Ladevorrichtung nach Anspruch 11, welche eine mit dem Gestell (21) verbundene Koppelvorrichtung umfasst.

13. Mobile Ladevorrichtung nach Anspruch 12, welche eine an dem Gestell (21) vorgesehene Verriegelungsvorrichtung umfasst.

14. Mobile Ladevorrichtung nach einem der Ansprüche 11 bis 13, welche ein Kommunikationsmodul zum Errichten einer Datenverbindung mit dem Elektrofahrzeug (10) umfasst.

## Claims

1. Method for charging an electric vehicle (10) during travel of the electric vehicle (10), having the following steps:

    - providing a mobile charging device (20);
    - arranging the mobile charging device (20) under a travelling electric vehicle (10);
    - fastening the mobile charging device (20) to an underside of the electric vehicle (10);
    - transferring electrical energy from the mobile charging device (20) to the electric vehicle (10);
    - detaching the mobile charging device (20) from the underside of the electric vehicle (10);
    - providing the mobile charging device (20) again,

    **characterised in that**
    the electrical energy from a battery (11) of a further electric vehicle (10) is transferred by means of a further mobile charging device (20) fastened to the further electric vehicle (10) via at least one further magnetic induction path, wherein the electric vehicle (10) and the further electric vehicle (10) form a travelling convoy (30) and travel, during the transfer of the electrical energy, at a predetermined distance behind one another in such a manner that the further magnetic induction path is formed between the two mobile charging devices (20).

2. Method according to claim 1, in which the mobile charging device (20) is provided with a charged battery.

3. Method according to claim 2, in which the electrical energy from the battery of the mobile charging device (20) is transferred via a magnetic induction path to the battery (11) of the electric vehicle (10).

**4.** Method according to claim 2, in which the battery of the mobile charging device (20) is inserted into the electric vehicle (10).

**5.** Method according to claim 4, in which the battery of the mobile charging device (20) is used as a substitute for a discharged battery (11) of the electric vehicle (10).

**6.** Method according to any of claims 1 to 5, in which the travelling convoy (30) is formed by the two electric vehicles (10) and at least one third vehicle (10) provided with a mobile charging device (20).

**7.** Method according to any of claims 1 to 6, in which the mobile charging device (20) is coupled to the electric vehicle (10) for fastening.

**8.** Method according to claim 7, in which the mobile charging device (20), in the coupled state, is locked to the underside of the electric vehicle (10).

**9.** Method according to any of claims 1 to 8, in which the mobile charging device (20) is provided in a supply unit, accelerated for arrangement, moved from the supply unit under the electric vehicle (10) and moved into a supply unit in order to be provided again.

**10.** Method according to claim 9, in which the mobile charging device (20) is moved on a straight path under the electric vehicle (10).

**11.** Mobile charging device (20) for charging an electric vehicle (10) during travel of the electric vehicle (10) in a method according to any of claims 1 to 10, comprising a frame (21), a receptacle (24) for a battery (11), which receptacle is formed on the frame (21), a plurality of rollers (22) rotatably mounted and driven on the frame (21), three induction coils (23) arranged on the frame, and at least one sensor for detecting a position relative to the electric vehicle (10), wherein two of the three induction coils are arranged on a front side of the frame and on a rear side of the frame so as to be able to form a magnetic induction path with a preceding or a following frame, and the third induction coil is arranged in a central portion of the frame such that a position of the third induction coil corresponds to a position of an induction coil of the electric vehicle when the mobile charging device is secured under the electric vehicle.

**12.** Mobile charging device according to claim 11, comprising a coupling device connected to the frame (21).

**13.** Mobile charging device according to claim 12, comprising a locking device provided on the frame (21).

**14.** Mobile charging device according to any of claims 11 to 13, comprising a communication module for setting up a data connection with the electric vehicle (10).

**Revendications**

**1.** Procédé de charge d'un véhicule électrique (10) pendant un déplacement du véhicule électrique (10), comprenant les étapes suivantes consistant à :

- fournir un dispositif de charge mobile (20) ;
- agencer le dispositif de charge mobile (20) sous un véhicule électrique en déplacement (10) ;
- fixer le dispositif de charge mobile (20) à un dessous du véhicule électrique (10) ;
- transférer de l'énergie électrique du dispositif de charge mobile (20) au véhicule électrique (10) ;
- détacher le dispositif de charge mobile (20) du dessous du véhicule électrique (10) ;
- fournir à nouveau le dispositif de charge mobile (20),

**caractérisé en ce que**
l'énergie électrique provenant d'une batterie (11) d'un autre véhicule électrique (10) est transmise au moyen d'un autre dispositif de charge mobile (20) fixé à l'autre véhicule électrique (10) via au moins une autre voie d'induction magnétique, dans lequel le véhicule électrique (10) et l'autre véhicule électrique (10) forment un convoi de véhicules (30) et roulent l'un derrière l'autre à une distance prédéterminée pendant le transfert de l'énergie électrique, de sorte que l'autre voie d'induction magnétique est formée entre les deux dispositifs de charge mobiles (20).

**2.** Procédé selon la revendication 1, dans lequel le dispositif de charge mobile (20) est pourvu d'une batterie chargée.

**3.** Procédé selon la revendication 2, dans lequel l'énergie électrique est transférée de la batterie du dispositif de charge mobile (20) à la batterie (11) du véhicule électrique (10) via une voie d'induction magnétique.

**4.** Procédé selon la revendication 2, dans lequel la batterie du dispositif de charge mobile (20) est utilisée dans le véhicule électrique (10).

**5.** Procédé selon la revendication 4, dans lequel la batterie du dispositif de charge mobile (20) est utilisée en remplacement d'une batterie déchargée (11) du véhicule électrique (10).

**6.** Procédé selon l'une quelconque des revendications 1 à 5, dans lequel le convoi de véhicules (30) est formé par les deux véhicules électriques (10) et au moins un troisième véhicule (10) pourvu d'un dispositif de charge mobile (20).

**7.** Procédé selon l'une quelconque des revendications 1 à 6, dans lequel le dispositif de charge mobile (20) est couplé au véhicule électrique (10) pour fixation.

**8.** Procédé selon la revendication 7, dans lequel le dispositif de charge mobile (20) est verrouillé dans l'état couplé au niveau du dessous du véhicule électrique (10).

**9.** Procédé selon l'une quelconque des revendications 1 à 8, dans lequel le dispositif de charge mobile (20) est mis à disposition dans une installation de mise à disposition pour un agencement accéléré, déplacé hors de l'installation de mise à disposition jusque sous le véhicule électrique (10) et déplacé vers une installation de mise à disposition pour une mise à disposition renouvelée.

**10.** Procédé selon la revendication 9, dans lequel le dispositif de charge mobile (20) est déplacé jusque sous le véhicule électrique (10) sur une trajectoire rectiligne.

**11.** Dispositif de charge mobile (20) pour charger un véhicule électrique (10) pendant que le véhicule électrique (10) se déplace dans un procédé selon l'une des revendications 1 à 10, qui comprend un support (21), un logement (24) formé sur le support (21) pour une batterie (11), une pluralité de rouleaux (22) montés rotatifs et entraînés sur le support (21), trois bobines d'induction (23) agencées sur le support, et au moins un capteur pour détecter une position par rapport au véhicule électrique (10), dans lequel deux des trois bobines d'induction sont agencées sur un côté avant du support et sur un côté arrière du support afin de pouvoir former une voie d'induction magnétique avec un support précédent ou suivant, et la troisième bobine d'induction est agencée dans une section médiane du support de sorte qu'une position de la troisième bobine d'induction correspond à une position d'une bobine d'induction du véhicule électrique lorsque le dispositif de charge mobile est fixé sous le véhicule électrique.

**12.** Dispositif de charge mobile selon la revendication 11, qui comprend un dispositif de couplage relié au support (21).

**13.** Dispositif de charge mobile selon la revendication 12, qui comprend un dispositif de verrouillage prévu au niveau du support (21).

**14.** Dispositif de charge mobile selon l'une quelconque des revendications 11 à 13, qui comprend un module de communication pour établir une connexion de données avec le véhicule électrique (10).

Fig. 1

Fig. 2

Fig. 3

Fig. 4

EP 3 578 411 B1

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9592742 B1
- DE 102012214750 A1
- DE 102015225789 A1
- DE 102016014034 A1
- JP 2009213337 A
- DE 102016221064 A1